# EUROPEAN PATENT SPECIFICATION

(11) **EP 1 743 831 B1**
(45) Date of publication and mention of the grant of the patent: **09.09.2009**
(21) Application number: 06014239.5
(22) Date of filing: 10.07.2006
(51) Int. Cl.: B62K 21/00, B62K 11/00

(54) **Vehicle with steerable rear wheel**
Fahrzeug mit lenkbarem Hinterrad
Véhicule avec roue arrière directrice

(30) Priority: 12.07.2005 JP 2005202388
(43) Date of publication of application: 17.01.2007
(73) Proprietor: Yamaha Hatsudoki Kabushiki Kaisha, Iwata-shi, Shizuoka-ken 438-8501 (JP)
(72) Inventor: Tsujii, Eiichirou, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 671 877
- EP-A- 1 674 386
- EP-A2- 0 282 333
- US-A- 4 984 650

## Description

The present invention relates to vehicles, and more particularly, to vehicles in which both of a front wheel and a rear wheel can be steered.

Four-wheeled vehicles (vehicles) in which both of front wheels and rear wheels can be steered are now in practical use. Also for two-wheeled vehicles, various researches on two-wheel steering of not only a front wheel but also a rear wheel have been made (e.g., refer to JP-B-7-25346).

JP-B-7-25346 discloses a two-wheeled vehicle including a front-wheel steering member disposed above a front wheel for steering a front wheel; a rear-wheel steering member disposed on the side of a rear wheel for steering a rear wheel; and a connecting member for connecting the front-wheel steering member and the rear-wheel steering member. With the two-wheeled vehicle, when the front wheel is steered, the rear wheel is rotated around a substantially vertical shaft via the connecting member and the rear-wheel steering member to be provided with a steering angle.

However, since the structure of JP-B-7-25346 has the front-wheel steering member disposed above the front wheel, the rear-wheel steering member disposed on the side of the rear wheel, and the connecting member, the rear-wheel steering member extends from above the front wheel to the side of the rear wheel. This poses the problem of upsizing the rear-wheel steering member.

EP-A-0282333 A2 discloses a motorcycle comprising a front frame for supporting a front wheel and a main frame for supporting a rear wheel. A steering shaft is rotatably disposed at the front frame. A base portion of the main frame supports rotatably a connecting shaft connected to the front frame. A connecting bracket joined to the front frame is connected to a connecting member swingable with the connecting shaft. During the steering operation of the steering shaft, the driver is banking and pivots the seat frame which causes a turning of the connecting shaft relatively to the base portion of the main frame.

EP 1674386 A2, a document under Article 54(3) EPC discloses a motorcycle comprising a head pipe for supporting a front wheel and a main frame for supporting a rear wheel. The head pipe includes a shaft portion extending into a shaft inserting aperture of the main frame so that the head pipe and the main frame are rotatable relative to each other about a longitudinally extending pivot axis. This pivot axis passes through the vicinity of a tangency at which the rear wheel contacts with the ground. The shaft portion includes a projection connected to a pivotal member which in turn is connected via a coupling member to a piston rod of a hydraulic cylinder, said piston rod having a piston inserted into a tube connected to the main frame. A leaf spring disposed between the pivotal member and the main frame urges the pivotal member into a neutral position.

EP 1678877 A1, a document under Article 54(3) EPC discloses a motorcycle comprising a head pipe for supporting a front wheel and a main frame for supporting a rear wheel. The head pipe includes a cylindrical shaft rotatably supported in an insertion part of the main frame. A torsion spring absorbs a shock as the head pipe rotates with respect to the main frame. A hydraulic cylinder is provided for damping vibration of the torsion spring while absorbing a shock. A pair of stoppers is provided for preventing the head pipe from rotating excessively with respect to the main frame.

It is an object of the present invention to provide a vehicle capable of giving the rear wheel a steering angle while preventing an increase in the size of the rear-wheel steering member.

This objective is solved in an inventive manner by a vehicle comprising front and rear frames for respectively supporting front and rear wheels, said front and rear frames being rotatable relative to each other about a longitudinally extending axis L1, a steering means rotatably disposed at the front frame, and a connecting means connecting the steering means and the rear frame such that the rear wheel is given a steering angle via the rear frame during a steering operation of the steering means, the connecting means being a spring plate connecting member.

Preferably, the connecting means connects the steering means and the rear frame so that the rear wheel is rotated in the direction opposite to the steering direction of the steering means during the steering of the steering means.

Further, preferably a first end of the connecting means is connected to the steering means so as to be rotatable around a position a predetermined distance behind from the rotation center of the steering means, and a second end of the connecting means is secured to the rear frame. Therein, the second end of the connecting means may be disposed at the front end of the rear frame.

Still further, preferably the connecting means has a spring characteristic, and the connecting means connects the steering means and the rear frame together while urging the steering means so as to decrease a steering torque when the steering means is steered from a straight-ahead driving state.

Likewise, the extension of the longitudinally extending axis L1 may pass through the vicinity of the contact between the rear wheel and the ground.

According to a further embodiment, the vehicle further comprises a bearing disposed between the front frame and the rear frame, the bearing rotatably supporting the front frame and the rear frame. Therein, the bearing may be an angular bearing. Further, the front frame may include a head pipe, the head pipe may have a protruding first bearing mounting portion projecting rearward from the head pipe and may have a rotation center on the longitudinally extending axis (L1) and an outer circumference to which the angular bearing is mounted, and the rear frame may have a second bearing mounting portion disposed to face the protruding first bearing mounting portion of the head pipe and may have an inner circumference to which the angular bearing is mounted.

According to a further embodiment, the center of gravity is located at a portion other than the extension of the longitudinally extending axis.

Moreover, the longitudinally extending axis may extend downward to the rear of the front frame.

Additionally, the vehicle may further comprise restricting means for restricting the angle at which the rear frame rotates relative to the front frame.

Also, the vehicle may further comprise a headlamp disposed at the front of the front frame, wherein the headlamp is fixed to the rear frame.

In the following, the present invention is explained in greater detail with respect to several embodiments thereof in conjunction with the accompanying drawings, wherein:
- Fig. 1: is a side view of the entire structure of a motorcycle according to an embodiment,
- Fig. 2: is an enlarged side view of the vicinity of the head pipe of the motorcycle of the embodiment shown in Fig. 1,
- Fig. 3: is an explanatory diagram of the structure of the motorcycle according to the embodiment of Fig. 1, as viewed from arrow P,
- Fig. 4: is an explanatory diagram of the structure of the motorcycle according to the embodiment of Fig. 1, as viewed from arrow Q,
- Fig. 5: is an explanatory diagram of the structure of the vicinity of the head pipe of the motorcycle according to the embodiment of Fig. 1, as viewed from arrow P,
- Fig. 6: is an explanatory diagram of the rotating action of the main frame during the straight-ahead driving of the motorcycle according to the embodiment of Fig. 1, as viewed from arrow P,
- Fig. 7: is an explanatory diagram of the rotating action of the main frame during the straight-ahead driving of the motorcycle according to the embodiment of Fig. 1, as viewed from arrow Q,
- Fig. 8: is a plan view for explaining the rotating action of the main frame during the straight-ahead driving of the motorcycle according to the embodiment of Fig. 1, and
- Fig. 9: is a plan view for explaining the rotating action of the main frame during the straight-ahead driving of the motorcycle according to the embodiment of Fig. 1.

### Description of Reference Numerals:

1: motorcycle (vehicle)
2: head pipe (front frame)
2a: shaft (first bearing mounting portion)
3: main frame (rear frame)
3a: through hole (second bearing mounting portion)
7: angular bearing
8: rear wheel
9: front-wheel steering member (steering means)
10: connecting member (connecting means)
10a: first end
10d: second end
11: stopper (restricting means)
12: headlight (headlamp)
100: ground
L1: center line (axis)

The present invention will be described in detail below based on an embodiment, with reference to the attached drawings.

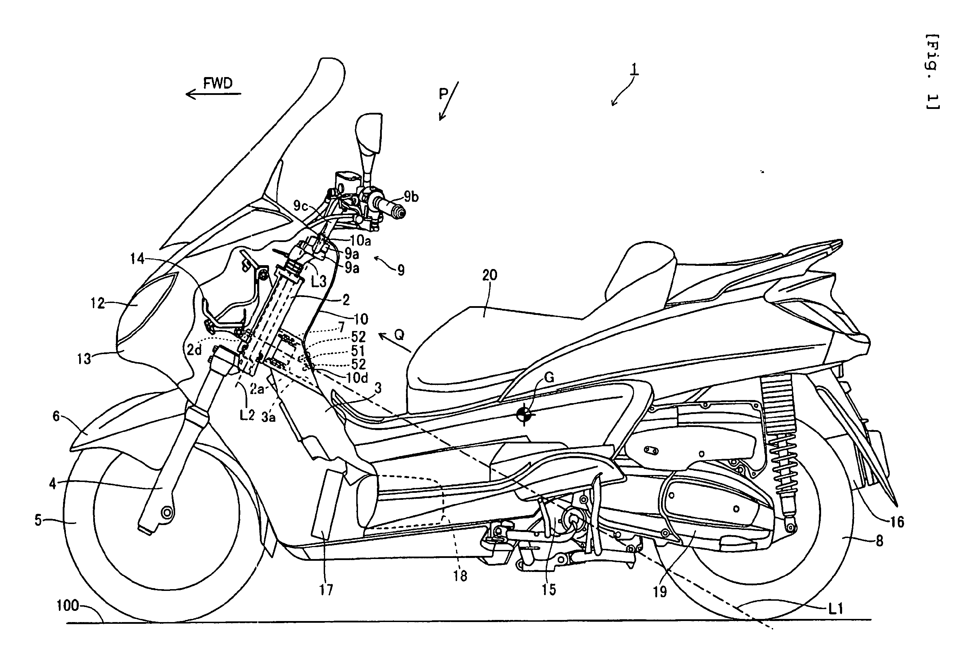

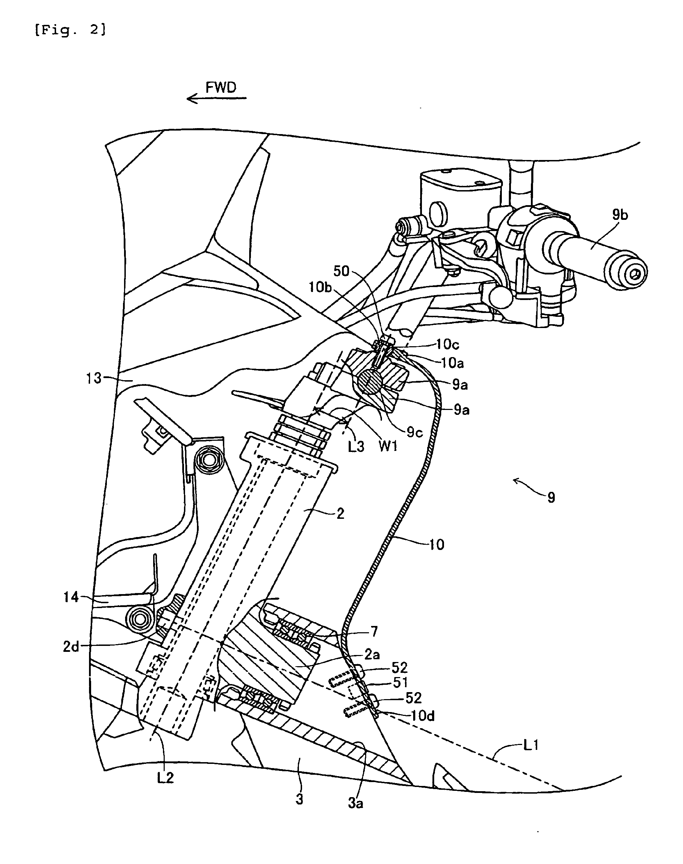

Fig. 1 is a side view of the entire structure of a motorcycle according to an embodiment; Fig. 2 is an enlarged side view of the vicinity of a head pipe of the motorcycle of the embodiment shown in Fig. 1; and Figs. 3 to 5 are diagrams for explaining the structure of the motorcycle according to the embodiment shown in Fig. 1. In the embodiment, a motorcycle is described as an example of the present vehicle. In the drawings, FWD indicates the front of the motorcycle in the traveling direction. Referring to Figs. 1 to 5, the structure of the motorcycle according to the embodiment will be specifically described.

As shown in Fig. 1, the motorcycle, denoted by 1, according to the embodiment, has a main frame 3 behind a head pipe 2. The head pipe 2 is an example of "a front frame" of the embodiment; and the main frame 3 is an example of "a rear frame" of the embodiment. The main frame 3 extends toward the lower rear. The main frame 3 connects to a seat rail (not shown). Between the rear of the main frame 3 and the rear end of the seat rail is connected a back stay (not shown). The head pipe 2, the main frame 3, the seat rail, and the back stay construct a body frame.

A pair of front forks 4 having a suspension for absorbing a vertical impact is disposed under the head pipe 2. A front wheel 5 is rotatably mounted to the lower parts of the pair of front forks 4. Above the front wheel 5 is disposed a front fender 6 so as to cover the front wheel 5.

In this embodiment, as shown in Fig. 2, a cylindrical shaft 2a projecting toward the lower rear is integrated with the rear of the head pipe 2. The shaft 2a is an example of "a first shaft mounting portion" of the embodiment. The main frame 3 has a through hole 3a fitting on the shaft 2a of the head pipe 2. The through hole 3a is an example of "a second shaft mounting portion" of the embodiment. An angular bearing 7 is disposed between the outer circumference of the shaft 2a of the head pipe 2 and the inner circumference of the through hole 3a of the main frame 3. This enables the head pipe 2 to rotate relative to the main frame 3, around the center line L1 of the shaft 2a extending in the front-back direction. The center line L1 of the shaft 2a of the head pipe 2 is an example of "an axis" of the embodiment. The angular bearing 7 is an example of "a bearing" of the embodiment. The angular bearing 7 is disposed such that the central axis thereof substantially agrees with the center line L1 of the shaft 2a of the head pipe 2 extending in the front-back direction. As shown in Fig. 1, the extension of the center line L1 extending in the front-back direction extends toward the lower rear (obliquely toward the lower rear) and passes through the vicinity of the contact between a rear wheel 8 and the ground 100. The center of gravity G of the motorcycle 1 (refer to Fig. 1) is disposed above the extension of the center line L1 without a rider thereon.

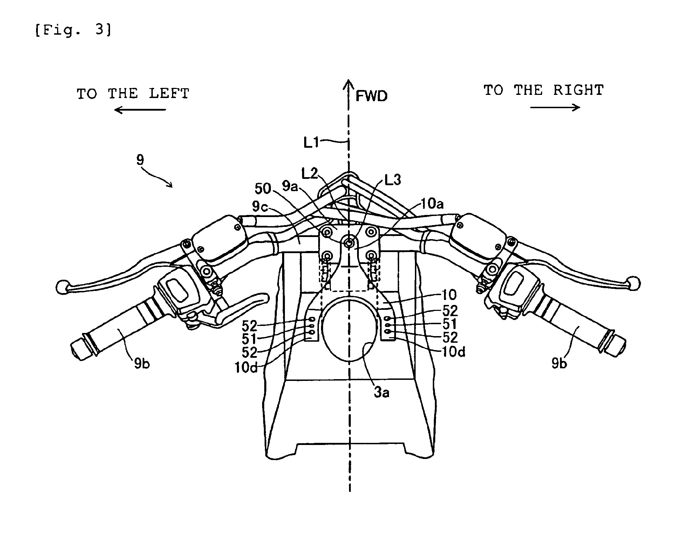

In this embodiment, as shown in Fig. 2, a front-wheel steering member (handle) 9 is disposed at the top of the head pipe 2. The front-wheel steering member 9 is an example of "steering means" of the embodiment. The front-wheel steering member 9 is disposed rotatably about a center line L2 of the head pipe 2. As shown in Fig. 3, the center line L2 is disposed above the center line L1, viewed from above. As shown in Fig. 2, the front-wheel steering member 9 has a fixing portion 9a. To the fixing portion 9a is fixed a shaft 9c having grips 9b on opposite ends thereof.

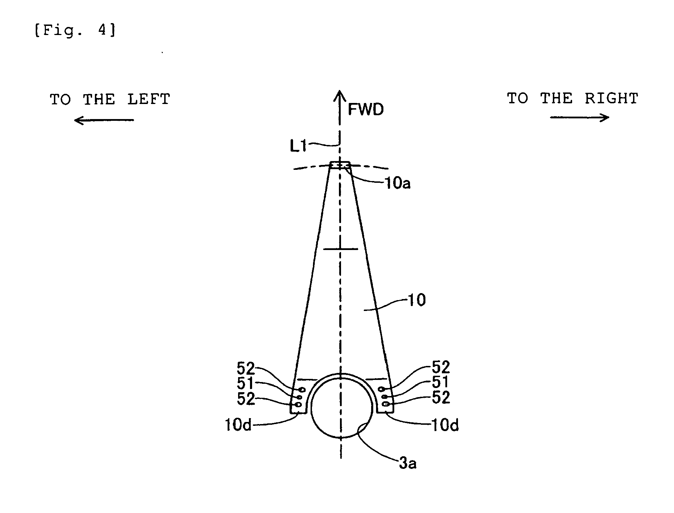

In the embodiment, as shown in Figs. 2 and 3, a first end 10a of a connecting member 10 made of a spring flat plate of about 4 mm in thickness is fixed to the fixing portion 9a of the front-wheel steering member 9, with the fixing portion 9a urged forward (in the direction of FWD). Specifically, as shown in Fig. 2, a pillow ball 10b is disposed at the first end 10a of the connecting member 10. The pillow ball 10b is fixed to the part of the fixing portion 9a a predetermined distance (W1) apart from the center line L2 of the head pipe 2 toward the rear by inserting a bolt 50 into an insertion hole 10c of the pillow ball 10b. This enables the first end 10a of the connecting member 10 to rotate about a center line L3 of the insertion hole 10c of the pillow ball 10b. The connecting member 10 is an example of "connecting means" of the embodiment. As shown in Fig. 2, second ends 10d of the connecting member 10 are fixed to the upper surface of the vicinity of the part to which the angular bearing 7 at the front end of the main frame 3 is mounted. As shown in Figs. 2 and 4, the second ends 10d of the connecting member 10 are two branches. The two branched second ends 10d are each positioned by a locating boss 51 of the main frame 3 and fixed with a bolt 52. Thus, the second ends 10d of the connecting member 10 can be rotated with the main frame 3 about the center line L1.

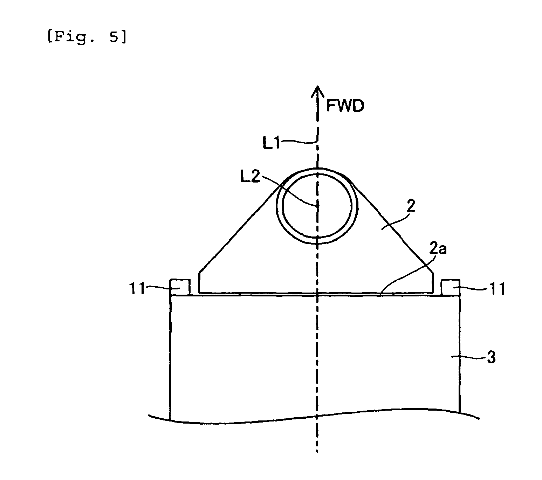

In the embodiment, as shown in Fig. 5, a pair of stoppers 11 is disposed at the front of the main frame 3 to prevent the excessive rotation of the main frame 3 relative to the head pipe 2. The stopper 11 is an example of "restricting means" of the embodiment. The pair of stoppers 11 comes into contact with the head pipe 2 when the main frame 3 rotates about the center line L1 clockwise or counterclockwise at a few angle (less than 10 degrees) relative to the head pipe 2.

As shown in Fig. 1, a headlight 12 for lighting frontward and a front cowl 13 covering the front of the head pipe 2 are provided in front of the head pipe 2. The headlight 12 is an example of "a headlight" of the embodiment. Between the headlight 12 and the head pipe 2 is disposed a stay 14 that supports the front cowl 13. On the stay 14 are mounted instruments (not shown).

In the embodiment, as shown in Fig. 2, the stay 14 is fixed to the main frame 3 and is supported by a support 2d of the head pipe 2 so as to rotate relative to the head pipe 2 about the center line L1 of the shaft 2a of the head pipe 2. Thus, even when the front-wheel steering member 9 is given a steering angle, the headlight 12 can light the front of the vehicle body (main frame 3) because it is fixed to the main frame 3. Since the stay 14 is fixed to the main frame 3, and is rotatably supported by the support 2d of the head pipe 2, the headlight 12 can easily be rotated relative to the head pipe 2 when the main frame 3 rotates relative to the head pipe 2.

As shown in Fig. 1, an engine 15 is mounted at the lower rear of the main frame 3. The engine 15 connects to an exhaust pipe (not shown). The exhaust pipe curves to the right in the traveling direction, extends toward the lower rear, and connects to a muffler 16. A radiator 17 for cooling the engine 15 is disposed in front of the engine 15. Between the engine 15 and the radiator 17 is disposed a fuel tank 18.

A pivot shaft (not shown) is provided at the rear end of the main frame 3. The front end of a rear arm 19 is supported by the pivot shaft so as to pivot vertically. The rear wheel 8 is rotatably mounted to the rear end of the rear arm 19. In other words, the rear wheel 8 is mounted to the main frame 3 via the rear arm 19. The rear wheel 8 is formed of what is called a round tire whose lower surface is in an arc shape, as viewed from the traveling direction, so as to lean relative to the vertical direction. The front wheel 5 is also formed of a round tire as is the rear wheel 8. A seat 20 is disposed on the main frame 3.

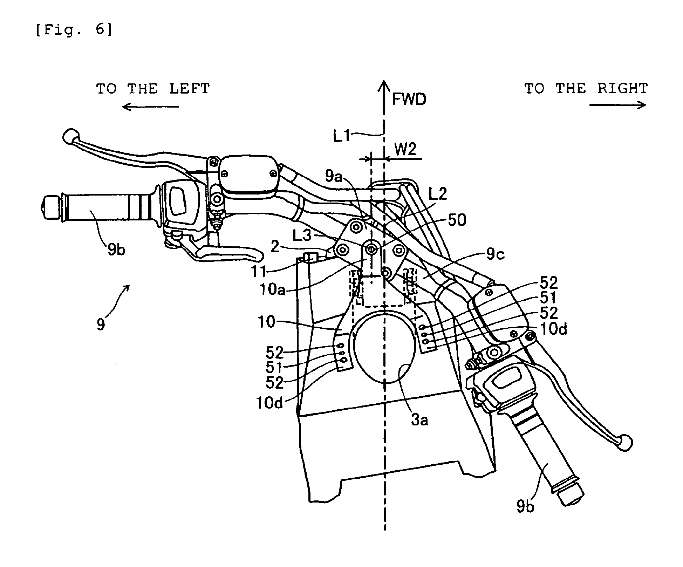

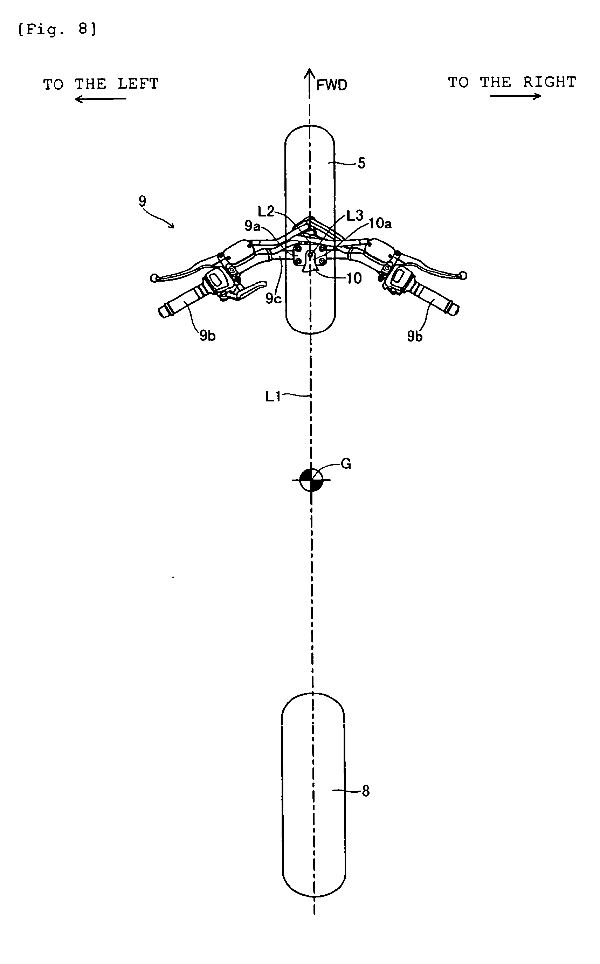

Figs. 6 to 9 are diagrams for explaining the rotating action of the main frame during the straight-ahead driving of the motorcycle according to the embodiment of Fig. 1. Referring to Figs. 3, 4, and 6 to 9, the action of the motorcycle 1 during straight-ahead driving will now be described.

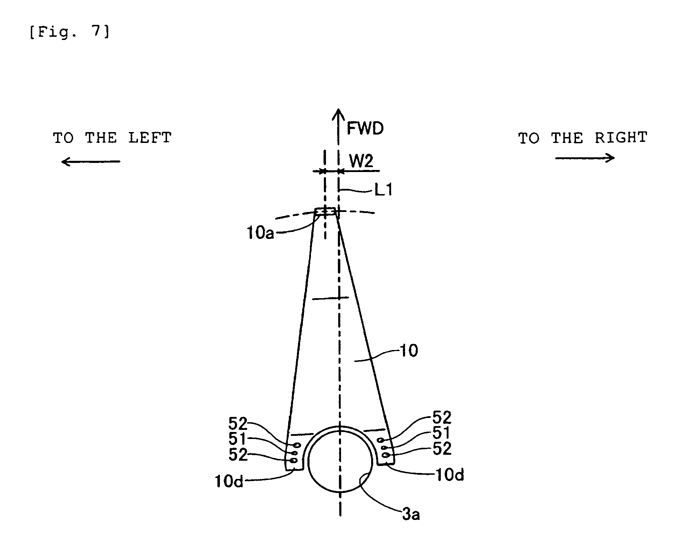

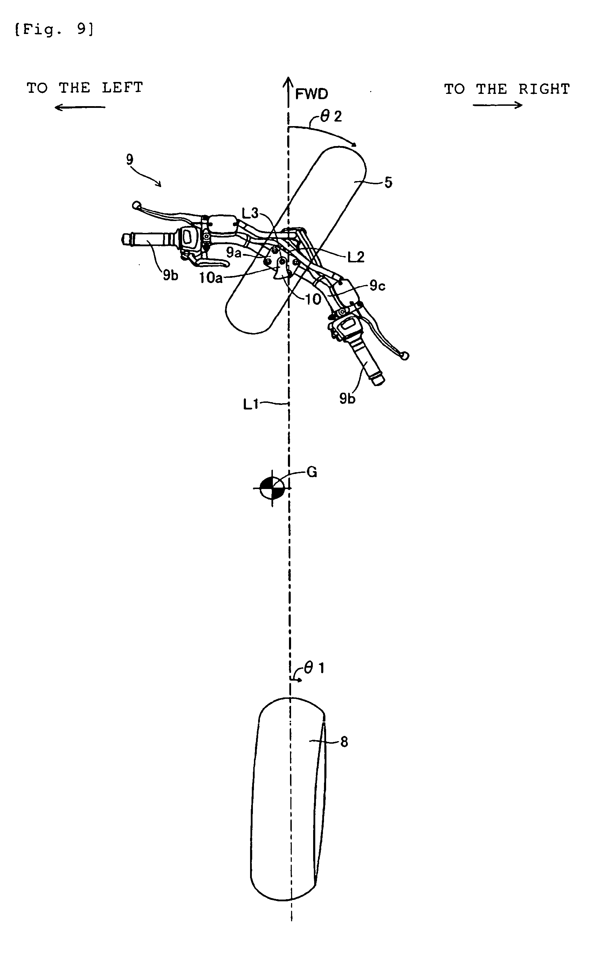

During the straight-ahead driving of motorcycles, riders normally steer handles to prevent the vehicle body from faltering to overturn. Specifically, for example, when the vehicle falters to the right, the rider steers the handle to the right to thereby prevent the vehicle from falling down to the right. The embodiment has the advantage of preventing the vehicle from faltering to overturn with a little steering operation. For example, when the vehicle falters to the right to give the front-wheel steering member 9 a rightward steering angle, as shown in Figs. 6 and 9, the connecting portion between the first end 10a of the connecting member 10 and the fixing portion 9a rotates about the center line L2, so that the first end 10a of the connecting member 10 moves to the left by a specified distance (W2) from the center line L1 (refer to Figs. 6 and 7). Thus the second ends 10d of the connecting member 10 are given a leftward force. At that time, as shown in Figs. 6 and 7, the second ends 10d of the connecting member 10 are fixed to the main frame 3 (refer to Fig. 6). Accordingly, the main frame 3 rotates to the left about the center line L1 by the leftward force given to the second ends 10d of the connecting member 10. At that time, the center of gravity G moves to the left from the center line L1 because the center of gravity G is disposed higher than the center line L1. This can prevent the vehicle from leaning to the right. Since the center line L1 extends toward the lower rear, the rear wheel 8 is given a rightward slanting steering angle θ1 (refer to Fig. 9) by the leftward rotation of the main frame 3. Thus the vehicle is given a rightward steering angle, which also prevents the vehicle from falling down. As a result, even with a steering angle smaller than that for preventing general motorcycles from falling down, the center of gravity G is moved and the rear wheel 8 is given a steering angle, thereby preventing the vehicle from faltering to overturn. The rightward slanting steering angle θ1 of the rear wheel 8 in this case is smaller than a rightward steering angle θ2 of the front wheel 5.

In this embodiment, for example, when the vehicle falters to the right to give the front-wheel steering member 9 a rightward steering angle, the connecting portion between the first end 10a of the connecting member 10 and the fixing portion 9a (refer to Fig. 6) rotates about the center line L2 (refer to Fig. 6), as shown in Figs. 6 and 7, so that the first end 10a moves left forward as compared with the state without the steering angle (shown in Figs. 3 and 4). In this case, the first end 10a of the spring connecting member 10 urges the fixing portion 9a frontward, thereby generating a moment to rotate the front-wheel steering member 9, and reducing the steering torque. Accordingly, even when the front-wheel steering member 9 and the main frame 3 are connected by the connecting member 10, the front-wheel steering member 9 can be steered with a small force. When the first end 10a of the connecting member 10 does not urge the fixing portion 9a forward, the second ends 10d do not move forward because they are fixed to the main frame 3, thereby preventing the forward movement of the first end 10a. In this case, the steering torque for rotating the front-wheel steering member 9 is large, resulting in a decrease in operability.

This embodiment has the main frame 3 that supports the rear wheel 8 and to which the head pipe 2 is mounted so as to rotate about the center line L1 extending toward the lower rear; and the connecting member 10 that connects the front-wheel steering member 9 and the main frame 3, as described above. Accordingly, when the front-wheel steering member 9 is given a steering angle, the main frame 3 and the rear wheel 8 are rotated about the center line L1 extending to the lower rear and the rear wheel 8 is given a steering angle via the connecting member 10. Thus there is no need to have a connecting member extending from the front-wheel steering member 9 to the rear wheel 8 to give the rear wheel 8 a steering angle. This enables the rear wheel 8 to be given a steering angle while preventing an increase in the size of a member for steering the rear wheel 8. This arrangement can prevent the vehicle from falling down while preventing an increase in the size of a member for steering the rear wheel 8.

In this embodiment, the second ends 10d of the connecting member 10 are mounted to the front end of the main frame 3, thereby reducing the length of the connecting member 10. This easily prevents an increase in the size of the member (connecting member 10) for steering the rear wheel 8.

In this embodiment, the connecting member 10 is shaped in a flat plate. Thus the connecting member 10 can easily be given a spring characteristic as a plate spring. Also, since the connecting member 10 is made of a flat plate, the connecting member 10 can be small in thickness, thus saving the space for mounting the connecting member 10, and reducing the size of the connecting member 10 for steering the rear wheel 8.

In this embodiment, the extension of the center line L1 of the shaft 2a extending in the front-back direction passes through the vicinity of the contact between the rear wheel 8 and the ground 100. With this arrangement, when the main frame 3 rotates relative to the head pipe 2, the rear wheel 8 rotates around the vicinity of the contact with the ground 100, thereby preventing the rear wheel 8 from sliding laterally on the ground 100.

This embodiment has the angular bearing 7 that supports the head pipe 2 and the main frame 3 so as to rotate relatively. This arrangement enables the main frame 3 to rotate smoothly relative to the head pipe 2 about the center line L1 of the shaft 2a extending in the front-back direction via the angular bearing 7. The use of the angular bearing 7 ensures both the rigidity of the connecting portion between the head pipe 2 and the main frame 3 in the direction along the longitudinal center line L1 (in the thrusting direction) and the rigidity in the direction perpendicular to the longitudinal center line L1 (in the radial direction).

This embodiment has the pair of stoppers 11 for limiting the angle at which the main frame 3 rotates relative to the head pipe 2, thereby preventing excessive rotation of the main frame 3 relative to the head pipe 2.

It is to be understood that the disclosed embodiment is merely an example, and does not intend to limit the teaching.

For example, the embodiment uses a motorcycle as an example of the vehicle. The teaching can also be applied to bicycles, three-wheeled vehicles, all terrain vehicles (ATVs) and other vehicles having a head pipe and a body frame.

While the embodiment has been described using an example in which an angular bearing is used to support the head pipe and the main frame relatively rotatably, the present teaching includes another bearing such as a taper-rolling bearing to support the head pipe and the main frame relatively rotatably.

While the embodiment has been described using an example in which the center line L1 of the shaft of the head pipe extends to the lower rear into the vicinity of the contact between the rear wheel and the ground, the present teaching includes a structure in which the center line L1 of the shaft of the head pipe extends to the lower rear and does not pass through the vicinity of the contact between the rear wheel and the ground.

While the embodiment has been described using an example having no member for attenuating the vibration of the connecting member when the main frame rotates relative to the head pipe, the present teaching includes an attenuator such as a damper to attenuate the vibration of the connecting member when the main frame rotates relative to the head pipe.

The description above discloses (amongst others) an embodiment of a vehicle, which includes: a front frame supporting a front wheel; steering means rotatably disposed at the front frame; a rear frame supporting a rear wheel and to which the front frame is rotatably mounted about the longitudinal axis; and connecting means connecting the steering means and the rear frame and giving the rear wheel a steering angle via the rear frame during the steering of the steering means, said connecting means being a spring plate connecting member.

As described above, the vehicle according to the above embodiment, includes the rear frame supporting the rear wheel and to which the front frame is rotatably mounted about the longitudinal axis; and the connecting means connecting the steering means and the rear frame and giving the rear wheel a steering angle via the rear frame during the steering of the steering means. Accordingly, there is no need to have connecting means extending from the steering means to the rear wheel to give the rear wheel a steering angle because the rear frame and the rear wheel rotate about the longitudinal axis and the rear wheel is given a steering angle when the steering means is steered. This arrangement can therefore give the rear wheel a steering angle while preventing an increase in the size of the component for steering the rear wheel. This arrangement can prevent the vehicle from turnover while preventing an increase in the size of the component for steering the rear wheel.

Preferably, in the vehicle according to this embodiment, the connecting means connects the steering means and the rear frame so that the rear wheel is rotated in the direction opposite to the steering direction of the steering means during the steering of the steering means. This arrangement can easily give the rear wheel a steering angle in the same direction as that of the steering means, thus preventing the vehicle from turnover.

In this case, preferably, a first end of the connecting means is connected to the steering means so as to be rotatable around a position a predetermined distance behind from the rotation center of the steering means, and a second end of the connecting means is secured to the rear frame. This arrangement enables the connecting portion between the steering means and the first end of the connecting means to rotate in the direction opposite to the steering direction around the rotation center of the steering means when the steering means is steered, thus giving the first end of the connecting means a force opposite to the steering direction. This gives also the second end of the connecting means a force opposite to the steering direction, thereby giving the connecting portion between the second end of the connecting means and the rear frame a force opposite to the steering direction. As a result, the rear frame can easily be rotated around the axis in the direction opposite to the steering direction, whereby the rear wheel can be given a steering angle in the same direction as the steering direction.

Preferably, in the vehicle according to the above embodiments, the second end of the connecting means is disposed at the front end of the rear frame. This arrangement can easily reduce the length of the connecting member. This can easily prevent an increase in the size of a member (connecting means) for steering the rear wheel.

Preferably, in the vehicle according to the above embodiments, the connecting means connects the steering means and the rear frame together while urging the steering means so as to decrease a steering torque when the steering means is steered from a straight-ahead driving state. With this arrangement, the steering torque can be reduced by the urging force of the spring connecting means when the steering means is steered. Thus, even when the steering means and the rear frame are connected by the connecting means, the steering means can be steered with small force.

In the vehicle having the spring connecting means, the connecting means is made of a spring plate-like member. This arrangement can easily give the connecting means a spring characteristic as a plate spring. Since the connecting means is made of a flat plate, the connecting means can be small in thickness, thus saving the space for mounting the connecting means, and preventing an increase in the size of the connecting means for steering the rear wheel.

Preferably, in the vehicle according to the above embodiments, the extension of the longitudinal axis passes through the vicinity of the contact between the rear wheel and the ground. With this arrangement, when the rear frame rotates relative to the front frame, the rear wheel rotates around the vicinity of the contact with the ground, thus preventing the rear wheel from sliding on the ground.

Preferably, the vehicle according to the above embodiments further includes a bearing disposed between the front frame and the rear frame, the bearing rotatably supporting the front frame and the rear frame. This arrangement enables the rear frame to rotate smoothly relative to the front frame around the longitudinal shaft via the bearing.

Preferably, in the vehicle having a bearing, the bearing is an angular bearing. The use of the angular bearing ensures the rigidity both in the direction along the longitudinal axis at the connecting portion between the front frame and the rear frame (in the thrusting direction) and in the direction perpendicular to the longitudinal axis (in the radial direction).

Preferably, in the vehicle having the angular bearing, the front frame includes a head pipe; the head pipe has a protruding first bearing mounting portion projecting rearward from the head pipe and having a rotation center on the longitudinal axis and an outer circumference to which the angular bearing is mounted; and the rear frame has a second bearing mounting portion disposed to face the protruding first bearing mounting portion of the head pipe and having an inner circumference to which the angular bearing is mounted. With this arrangement, mounting the angular bearing to the first bearing mounting portion of the head pipe and the second bearing mounting portion of the rear frame enables the rear frame to rotate relative to the front frame more easily.

Preferably, the vehicle according to the above embodiments has the center of gravity at a portion other than the extension of the longitudinal axis. With this arrangement, the center of gravity can be moved by rotating the rear frame about the axis. Thus, the vehicle can be prevented from turnover by moving the center of gravity in the direction opposite to the direction in which the vehicle is falling down.

Preferably, in the vehicle according to the above embodiments, the longitudinal axis extends downward to the rear of the front frame. This arrangement can easily give the rear wheel a steering angle by rotating the rear frame and the rear wheel about the axis extending to the lower rear.

Preferably, the vehicle according to the above embodiments further includes restricting means for restricting the angle at which the rear frame rotate relative to the front frame. This arrangement can prevent the excessive rotation of the rear frame relative to the front frame.

Preferably, the vehicle according to the above embodiments further includes a headlamp disposed at the front of the front frame, wherein the headlamp is fixed to the rear frame. With this arrangement, even when the steering means is given a steering angle, the front of the vehicle can be lighted because the headlamp is fixed to the rear frame.

The description above further discloses (as a particularly preferred embodiment) in order to provide a vehicle capable of giving a rear wheel a steering angle while preventing an increase in the size of a rear-wheel steering member, an embodiment of a vehicle (the motorcycle 1) that includes: a head pipe 2 supporting a front wheel 5; a front-wheel steering member 9 rotatably disposed at the head pipe 2; a main frame 3 supporting a rear wheel 8 and to which the head pipe 2 is rotatably mounted around a longitudinal center line L1; and a connecting member 10 connecting the front-wheel steering member 9 and the main frame 3 and giving the rear wheel 8 a steering angle via the main frame 3 during the steering of the front-wheel steering member 9.

The description above further discloses, according to a preferred first aspect, a vehicle comprising: a front frame supporting a front wheel; steering means rotatably disposed at the front frame; a rear frame supporting a rear wheel and to which the front frame is rotatably mounted about the longitudinal axis; and connecting means connecting the steering means and the rear frame and giving the rear wheel a steering angle via the rear frame during the steering of the steering means, the connecting means being a spring plate connecting member.

Further, as a preferred second aspect, the connecting means connects the steering means and the rear frame so that the rear wheel is rotated in the direction opposite to the steering direction of the steering means during the steering of the steering means.

Further, as a preferred third aspect, a first end of the connecting means is connected to the steering means so as to be rotatable around a position a predetermined distance behind from the rotation center of the steering means, and a second end of the connecting means is secured to the rear frame.

Further, as a preferred fourth aspect, the second end of the connecting means is disposed at the front end of the rear frame.

Further, as a preferred fifth aspect, the connecting means has a spring characteristic; and the connecting means connects the steering means and the rear frame together while urging the steering means so as to decrease a steering torque when the steering means is steered from a straight-ahead driving state.

Further as a preferred sixth aspect, the extension of the longitudinal axis passes through the vicinity of the contact between the rear wheel and the ground.

Further, as a preferred seventh aspect, the vehicle further comprises a bearing disposed between the front frame and the rear frame, the bearing rotatably supporting the front frame and the rear frame.

Further, as a preferred eighth aspect, the bearing is an angular bearing.

Further, as a preferred ninth aspect, the front frame includes a head pipe; the head pipe has a protruding first bearing mounting portion projecting rearward from the head pipe and having a rotation center on the longitudinal axis and an outer circumference to which the angular bearing is mounted; and the rear frame has a second bearing mounting portion disposed to face the protruding first bearing mounting portion of the head pipe and having an inner circumference to which the angular bearing is mounted.

Further, as a preferred tenth aspect, the center of gravity is located at a portion other than the extension of the longitudinal axis.

Further, as a preferred eleventh aspect, the longitudinal axis extends downward to the rear of the front frame.

Further, as a preferred twelfth aspect, the vehicle further comprises restricting means for restricting the angle at which the rear frame rotates relative to the front frame.

Further, as a preferred thirteenth aspect, the vehicle further comprises a headlamp disposed at the front of the front frame, wherein the headlamp is fixed to the rear frame.

## Claims

1. Vehicle comprising:
front and rear frames (2,3) for respectively supporting front and rear wheels (5,8), said front and rear frames (2, 3) being rotatable relative to each other about a longitudinally extending axis (L1),
a steering means (9) rotatably disposed at the front frame (2), and
a connecting means (10) connecting the steering means (9) and the rear frame (3) such that the rear wheel (8) is given a steering angle via the rear frame (3) during a steering operation of the steering means (9),
wherein said connecting means (10) is a spring plate connecting member.

2. Vehicle according to claim 1, wherein the connecting means (10) connects the steering means (9) and the rear frame so that the rear wheel (8) is rotated in the direction opposite to the steering direction of the steering means (9) during the steering of the steering means (9).

3. Vehicle according to claim 1 or 2, wherein a first end (10a) of the connecting means (10) is connected to the steering means (9) so as to be rotatable around a position a predetermined distance behind from the rotation center of the steering means (9), and a second end (10d) of the connecting means (10) is secured to the rear frame.

4. Vehicle according to claim 3, wherein the second end (10d) of the connecting means (10) is disposed at the front end of the rear frame (3).

5. Vehicle according to one of the claims 1 to 4, wherein due to its spring characteristic, the connecting means (10) connects the steering means (9) and the rear frame (3) together while urging the steering means (9) so as to decrease a steering torque when the steering means (9) is steered from a straight-ahead driving state.

6. Vehicle according to one of the claims 1 to 5, wherein the extension of the longitudinally extending axis (L1) passes through the vicinity of the contact between the rear wheel (8) and the ground.

7. Vehicle according to one of the claims 1 to 6, wherein a bearing (7) is disposed between the front frame (2) and the rear frame (3), the bearing (7) rotatably supporting the front frame (2) and the rear frame (3).

8. Vehicle according to claim 7, wherein the bearing (7) is an angular bearing.

9. Vehicle according to claim 8, wherein the front frame (2) includes a head pipe, the head pipe has a protruding first bearing mounting portion (2a) projecting rearward from the head pipe and having a rotation center on the longitudinally extending axis (L1) and an outer circumference to which the angular bearing is mounted, and the rear frame (3) has a second bearing mounting portion (3a) disposed to face the protruding first bearing mounting portion (2a) of the head pipe and having an inner circumference to which the angular bearing is mounted.

10. Vehicle according to one of the claims 1 to 9, wherein the center of gravity (G) is located at a portion other than the extension of the longitudinally extending axis (L1).

11. Vehicle according to one of the claims 1 to 10, wherein the longitudinally extending axis (L1) extends downward to the rear of the front frame (2).

12. Vehicle according to one of the claims 1 to 11, wherein there is restricting means (11) for restricting the angle at which the rear frame (3) rotates relative to the front frame (2).

13. Vehicle according to one of the claims 1 to 12, wherein a headlamp (12) is disposed at the front of the front frame (2), wherein the headlamp (12) is fixed to the rear frame (3).

## Patentansprüche

1. Fahrzeug, aufweisend:
einen vorderen und hinteren Rahmen (2, 3) zum jeweiligen Lagern des vorderen und hinteren Rades (5, 8), wobei der vordere und hintere Rahmen (2, 3) um eine sich längs erstreckende Achse (L1) zueinander drehbar sind,
eine Lenkeinrichtung (9), drehbar angeordnet an dem vorderen Rahmen (2), und
eine Verbindungseinrichtung (10), die die Lenkeinrichtung (9) und den hinteren Rahmen (3) derart miteinander verbindet, dass dem Hinterrad (8) ein Lenkwinkel über den hinteren Rahmen (3) während einer Lenkbetätigung der Lenkeinrichtung (9) verliehen wird,
wobei die Verbindungseinrichtung (10) ein Blattfeder- Verbindungsteil ist.

2. Fahrzeug nach Anspruch 1, wobei die Verbindungseinrichtung (10) die Lenkeinrichtung (9) und den hinteren Rahmen verbindet, so dass das Hinterrad (8) in der Richtung entgegengesetzt zu der Lenkrichtung der Lenkeinrichtung (9) während des Lenkens der Lenkeinrichtung (9) gedreht wird.

3. Fahrzeug nach Anspruch 1 oder 2, wobei ein erstes Ende (10a) der Verbindungseinrichtung (10) mit der Lenkeinrichtung (9) verbunden ist, um drehbar um eine Position einen vorbestimmten Abstand hinter von dem Drehzentrum der Lenkeinrichtung (9) drehbar zu sein, und ein zweites Ende (10d) der Verbindungseinrichtung (10) an dem hinteren Rahmen befestigt ist.

4. Fahrzeug nach Anspruch 3, wobei das zweite Ende (10d) der Verbindungseinrichtung (10) an dem vorderen Ende des hinteren Rahmens (3) angeordnet ist.

5. Fahrzeug nach einem der Ansprüche 1 bis 4, wobei infolge ihrer Federcharakteristik die Verbindungseinrichtung (10) die Lenkeinrichtung (9) und den hinteren Rahmen (3) miteinander verbindet, während sie die Lenkeinrichtung (9) drängt, ein Lenkdrehmoment zu vermindern, wenn die Lenkeinrichtung (9) aus einem Geradeaus- Vorwärts- Antriebszustand gesteuert wird.

6. Fahrzeug nach einem der Ansprüche 1 bis 5, wobei die Verlängerung der sich längs erstreckenden Achse (L1) durch die Nähe des Kontaktes zwischen dem Hinterrad (8) und dem Boden hindurchgeht.

7. Fahrzeug nach einem der Ansprüche 1 bis 6, wobei ein Lager (7) zwischen dem vorderen Rahmen (2) und dem hinteren Rahmen (3) angeordnet ist, wobei das Lager (7) drehbar den vorderen Rahmen (2) und den hinteren Rahmen (3) lagert.

8. Fahrzeug nach Anspruch 7, wobei das Lager (7) ein Winkellager ist.

9. Fahrzeug nach Anspruch 8, wobei der vordere Rahmen (2) ein Kopfrohr enthält, das Kopfrohr einen vorspringenden ersten Lager- Montageabschnitt (2a) hat, der nach hinten von dem Kopfrohr vorspringt und ein Rotationszentrum auf der sich längs erstreckenden Achse (L1) hat und einen Außenumfang, an dem das Winkellager montiert ist, und der hintere Rahmen (3) einen zweiten Lager- Montageabschnitt (3a) hat, angeordnet, um dem vorspringenden ersten Lager- Montageabschnitt (2a) des Kopfrohres zugewandt zu sein und einen Innenumfang hat, an dem das Winkellager montiert ist.

10. Fahrzeug nach einem der Ansprüche 1 bis 9, wobei der Schwerpunkt (G) an einem anderen Abschnitt als der Verlängerung der sich längs erstreckenden Achse (L1) angeordnet ist.

11. Fahrzeug nach einem der Ansprüche 1 bis 10, wobei sich die sich längs erstreckende Achse (L1) nach unten zur Rückseite des vorderen Rahmens (2) erstreckt.

12. Fahrzeug nach einem der Ansprüche 1 bis 11, wobei es eine Begrenzungseinrichtung (11) zum Begrenzen des Winkels gibt, unter dem sich der hintere Rahmen (3) relativ zu dem vorderen Rahmen (2) dreht.

13. Fahrzeug nach einem der Ansprüche 1 bis 12, wobei ein Scheinwerfer (12) an der Vorderseite des vorderen Rahmens (2) angeordnet ist, wobei der Schweinwerfer (12) an dem hinteren Rahmen (3) befestigt ist.

## Revendications

1. Véhicule comprenant :
des châssis avant et arrière (2, 3), pour supporter respectivement des roues avant et arrière (5, 6), lesdits châssis avant et arrière (2, 3) étant susceptibles de tourner les uns par rapport aux autres, autour d'un axe (L1) s'étendant longitudinalement,
des moyens de manoeuvre directionnelle (9), montés à rotation sur le châssis avant (2), et
des moyens de liaison (10), reliant les moyens de manoeuvre directionnelle (9) et le châssis arrière (3), de manière que la roue arrière (8) se voit donner un angle de manoeuvre directionnelle, via le châssis arrière (3), durant une opération de manoeuvre directionnelle des moyens de manoeuvre directionnelle (9),
dans lequel lesdits moyens de liaison (10) sont formés d'un organe de liaison à plaque élastique.

2. Véhicule selon la revendication 1, dans lequel les moyens de liaison (10) relient les moyens de manoeuvre directionnelle (9) et le châssis arrière, de manière que la roue arrière (8) soit tournée dans le sens opposé au sens de braquage des moyens de manoeuvre directionnelle (9), durant la manoeuvre directionnelle des moyens de manoeuvre directionnelle (9).

3. Véhicule selon la revendication 1 ou 2, dans lequel une première extrémité (10a) des moyens de liaison (10) est reliée aux moyens de manoeuvre directionnelle (9), de manière à pouvoir tourner autour d'une position, à une distance prédéterminée à l'arrière du centre de rotation des moyens de manoeuvre directionnelle (9), et une deuxième extrémité (10d) des moyens de liaison (10) est fixée au châssis arrière.

4. Véhicule selon la revendication 3, dans lequel la deuxième extrémité (10d) des moyens de liaison (10) est disposée à l'extrémité avant du châssis arrière (3).

5. Véhicule selon l'une des revendications 1 à 4, dans lequel, du fait de leur caractéristique élastique, les moyens de liaison (10) relient ensemble les moyens de manoeuvre directionnelle (9) et le châssis arrière (3), tout en sollicitant les moyens de manoeuvre directionnelle (9), de manière à diminuer un couple de braquage, lorsque les moyens de manoeuvre directionnelle (9) sont manoeuvrés à partir d'un état de roulage en ligne droite.

6. Véhicule selon l'une des revendications 1 à 5, dans lequel l'extension de l'axe (L1) s'étendant longitudinalement passe à proximité du contact entre la roue arrière (8) et le sol.

7. Véhicule selon l'une des revendications 1 à 6, dans lequel un palier (7) est disposé entre le châssis avant (2) et le châssis arrière (3), le palier (7) supportant à rotation le châssis avant (2) et le châssis arrière (3).

8. Véhicule selon la revendication 7, dans lequel le palier (7) est un palier de rotation.

9. Véhicule selon la revendication 8, dans lequel le châssis avant (2) comprend un tube de tête, le tube de tête comprenant une première partie de montage de palier (2a) en saillie, se projetant vers l'arrière à partir du tube de tête et ayant un centre de rotation sur l'axe (L1) s'étendant longitudinalement, et une circonférence extérieure sur laquelle le palier de rotation est monté, et le châssis arrière (3) comprend une deuxième partie de montage de palier (3a), disposée face à la première partie de montage de palier (2a), en saillie, du tube de tête et ayant une circonférence intérieure sur laquelle le palier de rotation est monté.

10. Véhicule selon l'une des revendications 1 à 9, dans lequel le centre de gravité (G) est situé en une partie autre que l'extension de l'axe (L1) s'étendant longitudinalement.

11. Véhicule selon l'une des revendications 1 à 10, dans lequel l'axe (L1) s'étendant longitudinalement s'étend vers le bas, vers l'arrière du châssis avant (2).

12. véhicule selon l'une des revendications 1 à 11, dans lequel des moyens de limitation (11) sont prévus, pour limiter l'angle auquel le châssis arrière (3) tourne par rapport au châssis avant (2).

13. Véhicule selon l'une des revendications 1 à 12, dans lequel un feu avant (12) est disposé à l'avant du châssis avant (2), dans lequel le feu avant (12) est fixé au châssis arrière (3).
